# EUROPEAN PATENT SPECIFICATION

(11) **EP 0 629 256 B1**
(45) Date of publication and mention of the grant of the patent: **26.06.1996**
(21) Application number: 93905739.4
(22) Date of filing: 05.03.1993
(51) Int. Cl.: E04H 6/44, B64F 1/26

(54) **A TESTING BUILDING FOR TESTING AIRCRAFT ENGINES, PARTICULARLY OF PROPELLER TYPE**
TESTGEBÄUDE ZUM TESTEN VON FLUGZEUGMOTOREN, INSBESONDERE SOLCHE MIT PROPELLER
BATIMENT DESTINE AUX ESSAIS DE MOTEURS D'AVION, EN PARTICULIER CEUX A HELICES

(30) Priority: 06.03.1992 SE 9200700
(43) Date of publication of application: 21.12.1994
(73) Proprietor: VOLVO AERO SUPPORT AB, Arboga (SE)
(72) Inventor: STALBERG, Ingemar, S-644 00 Torshälla (SE); ELIASSON, Bernt, S-732 34 Arboga (SE); EKLUND, Hans, S-732 49 Arboga (SE); KYLBRING, Gösta, S-732 48 Arboga (SE); GRESSWELL, David, Beverly, North Humberside HU17 8LY (GB)
(74) Representative: Delmar, John-Ake
(86) International application number: SE9300195
(87) International publication number: WO9318252

(56) References cited:
- Volvo Aero Support AB, S-732 82 Arboga; "Noise suppressed run-up enclosure facility for Jet or Propeller powered commuter aircraft", Arboga, 1991, 8 pages

## Description

The present invention refers to a building for ground testing of aircraft engines, particularly of turboprop type, and comprising vertical walls and a roof, which on a ground surface delimit a closed test hall, in which the aircraft is to be placed, the engine or engines of which is/are to be tested, and air inlet and outlet ducts equipped with silencing baffles and extending substantially horizontally forwardly and rearwardly of the parked aircraft, respectively, and which have an adjoining inlet and outlet portion, respectively, directed in substantially vertical direction.

Ground testing of aircrafts most often is made outdoors and in unprotected environment. In doing so problems arise particularly in the form of noise which is disturbing to surrounding houses and the ever-increasing environment requirements therefore have led to a frequent location of the aircraft engine testing places at great distance from the workshops and other facilities at the airports. In its turn this requires extensive and time-consuming transports which constitute a basic problem which possibly could be solved by means of a suitable testing building. Such testing buildings have been utilized to a small extent in connection with military aircrafts with turbojet engines but due to the concentrated character of the jets it is relatively simple to collect and cool such jets and damp the noise therefrom.

In propeller-driven aircrafts the situation is different in that substantial technical difficulties have to be overcome which are associated with the great air flows which are difficult to control and occur in a limited test hall due to the great air volumes which furthermore varies from one operational case to another. Said air flows might give rise to sound amplifications in the form of acoustic resonances which influence on the aircraft in the form of vibrations. In order to avoid a re-circulation of air flows in the test hall the under-atmospheric pressure therein ought not to exceed 20 mm water column. Behind an aircraft propeller a helical air flow with low speed occurs which "circulates" in the test hall.

Now, the object of the present invention is to provide a testing building in which the air flows in the test hall can be effectively taken care of and a laminary and stable air flow can be maintained. This is obtained according to the invention substantially in that the air outlet duct in its portion closest to the testing hall has diffusor shape.

With the invention an increased pressure recovery is obtained in the diffusor which implies an improved damping of noise and elimination of the re-circulation. In order to secure that engine exhausts, particularly in tests with low propeller effect, are re-circulated in the hall it is furthermore suggested according to the invention that in the diffusor-shaped air outlet suction fans are arranged, which act transversely to the outlet direction. By the provision of protruding and guiding wall blades or portions at the inner surface of walls and roof further obstacles are obtained which prevent the re-circulation of air which possibly is contaminated with engine exhaust gases.

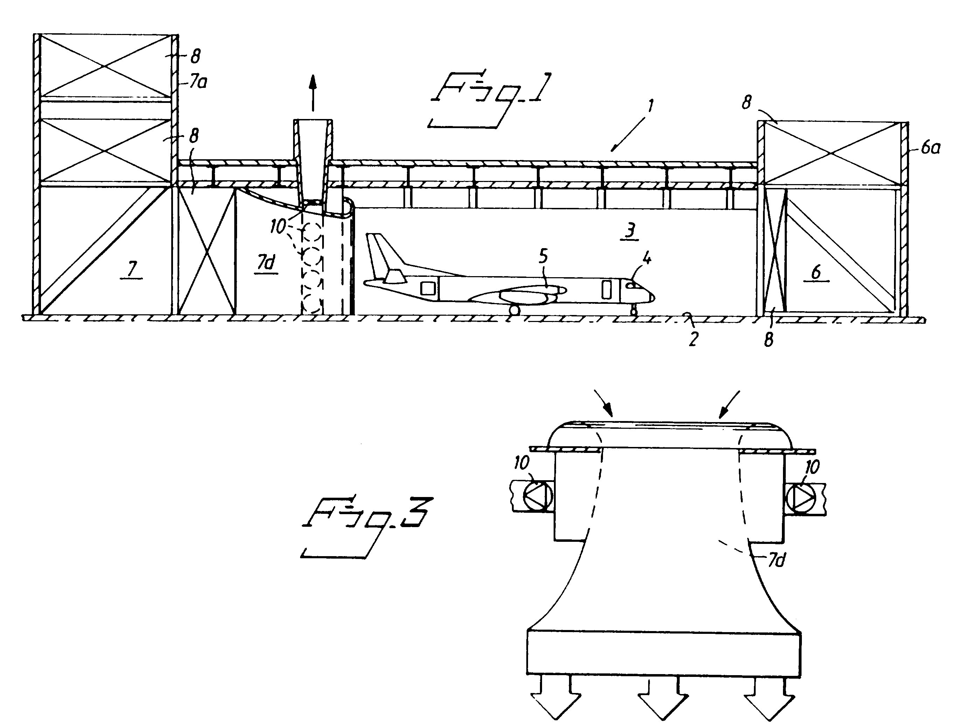

By way of example the invention will be further described below with reference to the accompanying drawings, in which Fig. 1 is a cross-sectional side view of a testing building according to the invention including an aircraft parked therein, Fig. 2 is a plan view from above of said test building with the roof omitted in order to illustrate the test hall and Fig. 3 is a detail view from above of the diffusor-shaped outlet.

In the drawings it is thus illustrated a testing building 1 having vertical walls and a roof which on a support or ground 2 delimit a closed test hall 3 in which the aircraft 4, the engine or engines 5 of which is/are to be tested, is adapted to be parked. The testing building is provided with an air inlet duct 6 at one end of the testing building 1, which the parked aircraft 4 is to be facing with its front portion, and an air outlet duct 7 at the opposite end of the testing building 1. Both the inlet duct 6 and the outlet duct 7 is provided with noise-damping panel elements or so-called baffles 8, preferably in several sets, and furthermore the respective inlet and outlet duct 6, 7 merges in an adjoining inlet and outlet portion 6a, 7a, respectively, which both are directed substantially vertically.

According to the invention the air outlet duct 7 has diffusor shape at its end or portion 7d located closest to the rear wall of the test hall 3. Preferably the vertical rear wall at either side of the air outlet portion 7d is shaped so as to be arcuately curved, see Fig. 3, so as to form a rounded inlet to said duct portion.

Although the diffusor-shaped portion 7d of the air outlet duct 7 as previously known might be provided with guide vanes, is for minimizing the border layer within the diffusor portion and for effectively preventing re-circulation of engine exhaust gases particularly in tests with low propeller effect, according to the invention mounted a number of suction fans 10 in the diffusor portion 7d, which act in a transverse vertical plane to the building 1. The outlet air hence is forced to follow the curved shape of the diffusor which, owing thereto, might be made substantially shorter than what otherwise should have been possible.

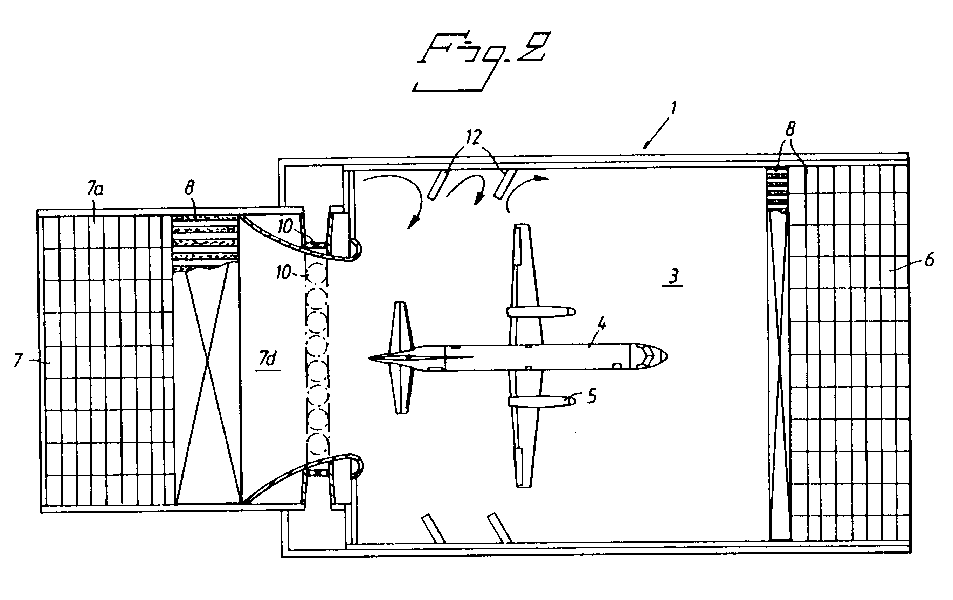

As a further measure for preventing that air which possibly is contaminated with engine exhaust gases, whirles around in the hall and follows the walls thereof from the rear and towards the front such that said air might be sucked into the air inlets of the engines and reach the air conditioning system of the cockpit with associating health hazards to the aircraft crew, protruding and guiding wall panels or portions 12 might be mounted to the inner surface of the walls and the roof such as is particularly evident from Fig 2. Preferably said wall panels 12 are mounted at positions in the length direction of the hall 3 which are located to the rear of the engine or engines 5 of the parked aircraft.

The sound or noise damping panel elements or baffles 8 might be of known construction and have the shape of box-like cassettes of sheet metal with perforated or apertured walls and be filled with a sound-absorbing material such as mineral wool or the like. Across the narrowest cross-section of the diffusor-shaped outlet portion 7d there can also be mounted a flow-stabilizing net.

By aero-dynamic model tests it has been verified that the suggested design according to the invention with diffusor shape of the air outlet 7 and the rest of the suggested measures effectively solves the problems of recirculating air flows, sound amplification, subatmospheric pressure and noise.

## Claims

1. A testing building for testing aircraft engines, particularly of propeller type, and comprising vertical walls and a roof, which on a ground surface (2) delimit a closed test hall (3), in which the aircraft (4) is to be placed, the engine or engines of which is/are to be tested, and air inlet and outlet ducts (6, 7), which are equipped with silencing baffles (8) and which extend substantially horizontally forwardly and rearwardly of the parked aircraft (4), respectively, and which have an adjoining inlet and outlet portion (6a, 7a), respectively, directed in substantially vertical direction, **characterized in** that the air outlet duct (7) in its portion closest to the testing hall (3) has diffusor shape.

2. A testing building according to claim 1, **characterized in** that in the diffusor-shaped air outlet portion (7d) are mounted suction fans (10) acting transversely to the outlet direction.

3. A testing building according to claim 1 or 2, **characterized in** that interior of the walls and roof are mounted protruding guide wall panels or portions (12) in order to prevent a re-circulation of air possibly contaminated with engine exhaust gases.

4. A testing building according to claim 3, **characterized in** that the guide wall panels (12) are mounted at positions in the lengthwise direction of the hall 3 which lie behind the engine or engines (5) of the parked aircraft.

## Patentansprüche

1. Testgebäude zum Testen von Flugzeugmotoren bzw. -triebwerken, insbesondere solche mit Propeller, mit senkrechten Wänden und einem Dach, die auf einer Untergrundoberfläche (2) eine geschlossene Testhalle (3) bilden, in der das Flugzeug (4) unterzubringen ist, dessen Motor(en) bzw. Triebwerk(e) getestet werden sollen, und Lufteinlaßund -auslaßzonen (6, 7), die mit Schalldämpfungsmaterialien (8) versehen sind und im wesentlichen horizontal vor bzw. hinter dem abgestellten Flugzeug (4) verlaufen und einen angrenzenden Einlaß- bzw. Auslaßabschnitt (6a, 7a) aufweisen, der in im wesentlichen vertikaler Richtung verläuft, **dadurch gekennzeichnet,** daß die Luftauslaßzone (7) in dem Abschnitt, der der Testhalle (3) am nächsten liegt, die Form eines Diffusors hat.

2. Testgebäude nach Anspruch 1,
**dadurch gekennzeichnet,**
daß im diffusorförmigen Luftauslaßabschnitt (7d) Sauggebläse (10) angeordnet sind, die quer zur Auslaßrichtung wirken.

3. Testgebäude nach Anspruch 1 oder 2,
**dadurch gekennzeichnet,**
daß auf der Innenseite der Wände und des Daches vorstehende Führungs-Wandplatten oder -abschnitte (12) befestigt sind, um eine Rezirkulation der möglicherweise mit Triebwerks- bzw. Motorauspuffgasen verschmutzten Luft zu verhindern.

4. Testgebäude nach Anspruch 3,
**dadurch gekennzeichnet,**
daß die Führungs-Wandplatten (12) an Positionen in Längsrichtung der Halle (3) angebracht sind, die sich hinter dem Triebwerk/Motor bzw. den Triebwerken/Motoren (5) des abgestellten Flugzeuges befinden.

## Revendications

1. Un bâtiment d'essais pour essayer des moteurs d'avion, en particulier du type à hélice, et comportant des parois verticales et un toit qui, sur une surface de sol (2), délimitent une enceinte fermée (3) d'essais, dans laquelle doit être placé l'avion (4) dont le ou les moteurs est/sont à essayer, et des conduites (6,7) d'entrée et de sortie d'air qui sont équipées de déflecteurs (8) de silencieux, qui s'étendent essentiellement horizontalement respectivement vers l'avant et vers l'arrière de l'avion (4) stationné et qui présentent respectivement une partie adjointe (6a, 7a) d'entrée et de sortie dirigée dans une direction essentiellement verticale, **caractérisé** en ce que la conduite (7) de sortie d'air, dans sa partie la plus voisine de l'espace d'essai (3), présente une forme en diffuseur.

2. Un bâtiment d'essais selon la revendication 1, **caractérisé** en ce que, dans la partie (7d) de sortie d'air en forme de diffuseur, sont montés des ventilateurs d'aspiration (10) agissant transversalement à la direction de sortie.

3. Un bâtiment d'esais selon la revendication 1 ou 2, **caractérisé** en ce que, à l'intérieur des parois et du toit, sont montés des panneaux ou parties (12) de parois de guidage en saillie pour empêcher une recirculation de l'air éventuellement contaminé par les gaz d'échappement de moteur.

4. Un bâtiment d'essais selon la revendication 3, **caractérisé** en ce que les panneaux (12) de parois de guidage sont montés en des emplacements, dans la direction en longueur de l'enceinte (3), qui sont situés derrière le ou les moteurs (5) de l'avion stationné.
